# EUROPÄISCHE PATENTSCHRIFT

(11) **EP 1 753 566 B1**
(45) Veröffentlichungstag und Bekanntmachung des Hinweises auf die Patenterteilung: **01.07.2009**
(21) Anmeldenummer: 05729735.0
(22) Anmeldetag: 09.04.2005
(51) Int. Cl.: B22F 9/22, C22B 5/12, C22B 34/24, H01G 9/042

(54) **VERFAHREN ZUR HERSTELLUNG VON NIOB- UND TANTALPULVER**
METHOD FOR THE PRODUCTION OF NIOBIUM AND TANTALUM POWDER
PROCEDE DE PRODUCTION DE POUDRES DE NIOBIUM ET DE TANTALE

(30) Priorität: 23.04.2004 DE 102004020052
(43) Veröffentlichungstag der Anmeldung: 21.02.2007
(60) Teilanmeldung: 08166120.9
(73) Patentinhaber: H.C. Starck GmbH, 38642 Goslar (DE); H.C. Starck Ltd., Chiyoda-ku Tokyo 100-8266 (JP)
(72) Erfinder: HAAS, Helmut, 38312 Achim (DE); BARTMANN, Ulrich, 38640 Goslar (DE); KOMEYA, Tadashi, Kujigun, Ibaraki 313-0125 (JP); SATO, Nobuyuki, Naka-gun, Ibaraki 310-3111 (JP)
(74) Vertreter: Clauswitz, Kai-Uwe Wolfram
(86) Internationale Anmeldenummer: PCT/EP2005/003758
(87) Internationale Veröffentlichungsnummer: WO 2005/105346

(56) Entgegenhaltungen:
- WO-A-00/67936
- PATENT ABSTRACTS OF JAPAN Bd. 2003, Nr. 05, 12. Mai 2003 (2003-05-12) -& JP 2003 013115 A (SUMITOMO METAL MINING CO LTD), 15. Januar 2003 (2003-01-15)

## Beschreibung

Die vorliegende Erfindung betrifft ein Verfahren zur Herstellung von Ventilmetallpulvern hoher spezifische Oberfläche aus den entsprechenden Oxiden mittels gasförmiger reduzierender Metalle und/oder Metallhydride und ferner ein Verfahren zur Herstellung von Tantalpulver das als Anodenmaterial für Elektrolytkondensatoren hoher spezifischer Kapazität geeignet ist.

Das Verfahren beruht auf der Reduktion von Ventilmetalloxidpulvern mittels dampfförmiger reduzierender Metalle wie Alkalimetalle, Aluminium, Magnesium, Calcium, Barium und/oder Lanthan und/oder deren Hydride, insbesondere Magnesium,

Erfindungsgemäß werden als Ventilmetalloxide Oxide von Titan, Zirkon, Hafnium, Vanadium, Niob, Tantal, Molybdän und/ oder Wolfram, vorzugsweise von Niob und/oder Tantal, eingesetzt.

Ein derartiges Verfahren ist aus der WO 00/67936 A1 bekannt Nach den dort offenbarten Beispielen wird feinteiliges, teilversintertes Tantalpentoxid, das auf einem Netz aus Tantaldraht eine poröse Schüttung bildet, mittels Magnesiumdampf, der unterhalb des Netzes durch Erhitzen von Magnesiumspänen erzeugt wird, bei 900 bis 1000°C unter Argon-Schutzgas zum Metall reduziert. Der Magnesiumdampfpartialdruck beträgt in diesem Temperaturbereich ca. 150 bis 400 hPa (=mbar). Die Reduktionszeit beträgt zwischen 2 bis 12 Stunden. Es werden Metallpulver mit spezifische Oberflächen von 2 bis 7 m²/g erhalten, in einem Falle (Beispiel 4) ist eine spezifische Oberfläche von 13,3 m²/g angegeben, allerdings fehlen bei diesem Beispiel die Angabe der Reduktionsdauer und des Sauerstoffgehaltes des Reduktionsproduktes. Aufgrund der vergleichsweise hohen Reduktionstemperatur ist davon auszugehen, dass es sich hierbei um ein unvollständig reduziertes Pulver mit hoher Defektstruktur handelt, bei dem die Reduktion nach der anfänglichen Desintegration des Ausgangsoxides aufgrund der großen Volumenschrumpfung und vor der bei der Reduktionstemperatur sich anschließenden Kristallverdichtung und Primärstrukturvergröberung (Verkleinerung der spezifischen Oberfläche) abgebrochen wurde.

Gemäß EP 1 302 263 A2 soll in einer ersten Reduktionsstufe mit gasförmigem Magnesium eine unvollständige Reduktion zu TaO_{0,6 .. 0,35} durchgeführt werden und danach in einer zweiten Stufe mit flüssigem Magnesium die Reduktion zum Metall erfolgen. Angaben über die spezifische Oberfläche nach der ersten Reduktionsstufe fehlen. Eine Rückrechnung der Beispiele unter der Annahme, dass der Restsauerstoff der den Abbrand bei Luftzutritt verhindernde Oberflächensauerstoff von 3000 µg/m² ist, ergibt spezifische Oberflächen von 6 m²/g für TaO₀,₂ bzw. 4,5 m²/g für TaO_{0,15}. Aufgrund der Charakterisierung als "unvollständig reduziert" dürften wesentliche Teile des Restsauerstoffs Volumensauerstoff sein, so dass die tatsächliche spezifische Oberfläche geringer ist

WO 00/67936 zeigt ein Verfahren zur Herstellung von Metallpulvern aus ihren Oxiden durch gasförmiges Magnesium. Der Einfluß des Gesamtdruckes wird nicht erwähnt.

JP 2003 013115 offenbart ein zweistufiges Verfahren zur Herstellung von Metallen, wobei in einem ersten Schritt durch gasförmiges Magnesium ein niedrig sauerstoffhaltiges Oxid erhaben und in einem zweiten Schritt im Gemisch mit Magnesium erhitzt und zum Metall reduziert wird. Weder der Einfluß des Gesamtdruckes noch die Möglichkeit der vollständigen Reduktion mit Magnesiumdampf werden erwähnt.

Aufgabe der vorliegenden Erfindung war es, ein Verfahren anzugeben, das die Herstellung von Ventilmetallpulvern hoher spezifischer Oberfläche erlaubt, wobei Agglomeratteilchen der Ventilmetallpulver nach Möglichkeit eine hohe Stabilität aufweisen sollen.

Es wurde nun gefunden, dass in der ersten Reduktionsstufe Ventilmetallpulver mit sehr dichter Primärstruktur und großer spezifischer Oberfläche erhalten werden, deren Sauerstoffgehalt den erforderlichen oberflächlichen Passivierungssauerstoff gegen Abbrand von 3000 µg/m² nicht übersteigt, wenn die Reduktion des Ventilmetalloxides, insbesondere Tantalpentoxides, bei geringem Dampfdruck des reduzierenden Metalls bzw. Metallhydrides und geringem Trägergasdruck und somit auch einem geringen Gesamtdruck im Reaktionsraum durchgeführt wird.

Gegenstand der vorliegenden Erfindung ist dem gemäß ein Verfahren nach Ansprüch 1.

Der Dampfdruck des reduzierenden Metalls beträgt vorzugsweise weniger als 80 hPa, insbesondere bevorzugt zwischen 8 und 50 hPa.

Bevorzugt wird als reduzierendes Metall Magnesium und/oder Magnesiumhydrid eingesetzt.

Vorzugsweise wird in Gegenwart eines inerten Trägergases reduziert, wobei der Partialdruck des Trägergases vorzugsweise 50 bis 800 hPa beträgt, besonders bevorzugt weniger als 600 hPa, insbesondere bevorzugt 100 bis 500 hPa.

Als inertes Trägergas sind inerte Gase wie Helium, Neon, Argon oder deren Mischungen geeignet. Vorteilhaft können geringe Zusätze von Wasserstoff sein. Das Trägergas wird vorzugsweise vor oder während der Einleitung in den Reaktor auf die Reaktortemperatur vorgewärmt, so dass eine Dampfkondensation des reduzierenden Metalls vermieden wird.

Der Gesamtdruck im Reaktionsraum setzt sich zusammen aus Dampfdruck des reduzierenden Metalls/Metallhydrids und Partialdruck des inerten Trägergases und liegt erfindungsgemäß während der gesamten Reducktionsdauer unter 1000 hPa (1 bar).

Vorzugsweise liegt der Gesamtdruck während der Reduktion zumindest zeitweise zwischen 55 und 910 hPa, insbesondere bevorzugt zwischen 105 und 610 hPa.

Die Reaktortemperatur wird bei oder geringfügig oberhalb der Temperatur, bei der sich der Dampfdruck des reduzierenden Metalls einstellt, gehalten, mindestens jedoch bei einer Temperatur, bei der die Reduktion noch hinreichend schnell fortschreitet. Im Falle, dass das bevorzugte Reduktionsmittel Magnesium eingesetzt wird, beträgt die Reaktortemperatur vorzugsweise 680 bis 880°C, vorzugsweise weniger als 850°C, insbesondere bevorzugt 690 bis 800°C und weiter bevorzugt weniger als 760°C.

Die Erfindung wird vorzugsweise zur Herstellung von Niob- oder Tantalpulver eingesetzt, insbesondere zur Reduktion von Tantalpentoxidpulver zu Tantalpulver oder Niobpentoxidpulver zu Niobpulver.

Gegenstand der vorliegenden Erfindung ist dem gemäß auch ein Verfahren zur Herstellung von Tantalpulver durch Reduktion von Tantalpentoxid mittels dampfförmiger reduzierender Metalle wie Alkalimetalle, Aluminium, Magnesium, Calcium, Barium und/oder Lanthan und/oder deren Hydride, insbesondere Magnesium, vorzugsweise unter einem inerten Trägergas, das dadurch gekennzeichnet ist, dass die Reduktion bei einem Dampfpartialdrock des reduzierenden Metalls/Metallhydrides von 5 bis 110 hPa durchgeführt wird und der Gesamtdruck im Reaktionsraum während der gesamten Reduktionsdauer kleiner 1000 hPa beträgt.

Bevorzugt erfolgt die Reduktion und die Erzeugung des Dampfes des reduzierenden Metalls in einem einheitlichen Reaktor, so dass die Reaktortemperatur zugleich den Dampfdruck des reduzierenden Metalls bestimmt.

Als Tantalpentoxidpulver wird vorzugsweise ein poröses, schwammartiges Pulver mit nach ASTM B 822 (Gerät Malvern MasterSizer Sµ) bestimmter Teilchengrößenverteilung von D10: 3 bis 25 µm, D50: 15 bis 80 µm und D90: 50 bis 280 µm und einer nach ASTM D 3663 bestimmten Oberfläche (BET) von 0,05 bis 0,5 m²/g eingesetzt.

Nach Beendigung der Reduktion erfolgt eine Passivierung der erhaltenen Metallpulver durch Oxidation der Pulverteilchenoberfläche durch kontrollierte allmähliche Sauerstoffeinleitung in den Reaktor nach Abkühlung auf eine Temperatur unterhalb 100°C und Auswaschung des gebildeten Oxides des reduzierenden Metalls mittels Säuren und Wasser.

Dabei werden Tantalpulver mit spezifischen Oberflächen von 6 bis 15 m²/g, vorzugsweise 8 bis 14 m²/g, im wesentlichen unter Erhaltung der Teilchengrößenverteilung des Ausgangsoxides mit bereits hervorragender mechanische Stabilität der Teilchen erhalten. Der Sauerstoffgehalt des Tantalpulvers nach Passivierung liegt bei ca. 3000 µg/m².

Die Erfindung erlaubt es, die Reduktionstemperatur auf 680 bis 880°C, ohne Wesentliche Verlängerung der Reduktionszeit, abzusenken. Bei Einsatz von Tantal- oder Nioboxidagglomeratpulvern mit Primärtellchengrößen (Durchmesser bei sphärischen Primärteilchen, geringste Abmessung bei nicht-sphärischen Primärteilchen) von 0,1 bis 5 µm sind Reduktionszeiten zwischen 6 und 12 Stunden, vorzugsweise bis zu 9 Stunden ausreichend. Nicht zuletzt bedingt die längere Reaktionstemperatur eine nicht unerhebliche Einsparung von Energie und die Schonung von bei der Reduktion erforderlichen verfahrenstechnischen Apparaten.

Das Verfahren wird mit stationärem Gasdruck, d.h. in einem geschlossenen Reaktor, der die für den Gaspartialdruck bei Arbeitstemperatur erforderliche Menge an inertem Trägergas enthält, durchgeführt werden. Bevorzugt ist jedoch, dass der Reaktor und die poröse Schüttung des zu reduzierenden Oxides von dem inerten Trägergas durchströmt wird. Dies kann dadurch erfolgen, dass an einer Stelle des Reaktors stetig oder intermittierend inertes Trägergas abgezogen wird und an einer Stelle über ein entsprechendes Druckregelventil stetig oder intermittierend inertes Trägergas dem Reaktor zugeführt wird, wobei die von der Schüttung des zu reduzierenden Oxides örtlich getrennte Verdampfungsquelle des reduzierenden Metalles bzw. Metallhydrides in Bezug auf die Strömungsrichtung des inerten Trägergases durch die Oxidschüttung stromauf angeordnet ist

Die erfindungsgemäß erhaltenen Tantalpulver mit großer spezifischer Oberfläche sind für die Herstellung von Elektrolytkondensatoren mit spezifischen Kapazitäten im Bereich von 200.000 bis 300.000 µFV/g in an sich bekannter Weise durch desoxidierende Primärstrukturvergröberung, Pressen zu Anodenstrukturen, Sintern der Anodenstrukturen zu Anodenkörpern, Formieren und Anbringen der Gegenelektrode, geeignet.

Es wurde weiterhin gefunden, dass die erhaltenen Tantalpulver in hervorragender Weise für die Herstellung von Kondensatoren mit spezifischen Kapazitäten im Bereich von 60.000 bis 160.000 µFV/g geeignet sind, wenn diese einer Primärstruktukvergröberung um mindestens einen Faktor 2,5, vorzugsweise um mindestens einen Faktor 3, insbesondere bevorzugt um einen Faktor 4 bis 6, unterworfen werden, d.h. die spezifische Oberfläche wird um einen Faktor 2,5 bzw. 3, vorzugsweise um einen Faktor 4 bis 6 herabgesetzt. Die Primärstrukturvergröberung wird durch Vermischen der Tantalpulver mit in Bezug auf den Sauerstoffgehalt der Pulver überstöchiometrischen Mengen Magnesium und Erhitzen unter Inertgas durchgeführt.

Erfindungsgemäß werden nach Primärstrukturvergröberung Tantalpulver mit einer spezifischen Oberfläche von 0.9 bis 6 m²/g, vorzugsweise von 0,9 bis 4 m²/g, erhalten, die aus Agglomeraten von Primärstrukturen mit einer mittleren geringsten Abmessung von 0,15 bis 0,8 µm bestehen, wobei die Agglomeratteilchen eine hervorragende Stabilität aufweisen, die auf stabile Sinterbrücken zwischen den Primärteilchen zurückgeführt wird.

Die erfindungsgemäßen erhaltenen Tantalpulver mit vergröberter Primärstruktur bestehen bevorzugt aus Agglomeraten mit einer Teilchengrößenverteilung mit einem D10-Wert von 5 bis 30 µm, einem D50-Wert von 20 bis 100 µm und einem D90-Wert von 40 bis 250 µm nach ASTM B 822 (Gerät Malvern MasterSizer Sµ), wobei die Teilchengrößenverteilung im wesentlichen der Teilchengößenverteilung der Oxid-reduzierten Tantalpulver entspricht.

Insbesondere wurde gefunden, dass die Pulver agglomerate eine hohe Agglomeratstabilität gegenüber Ultraschallbehandlung, gemessen als Quotient des D50-Wertes nach ASTM B 822 (Gerät Malvern Mastersizer) und des D50-Wertes nach Ultraschallbehandlung (D50_{US}-Wert), aufweisen.

Hergestellt durch die Erfindung sind auch Tantalpulver mit einer Stabilität gegenüber Ultraschallbehandlung, die durch einen Quotienten D50/D50_{US} von weniger als 2, vorzugsweise weniger als 1,5 charakterisiert sind. Zu dessen Bestimmung wird jeweils soviel Tantalpulver in 700 ml Wasser mit 30 mg des Benetzungsmittels Daxad 11 unter Rühren dispergiert, bis die Lichtschwächung im Bereich von etwa 20% liegt, um Mehrfachreflexionen des Laserstrahls bei der Bestimmungsmethode zu vermeiden. Die Konzentration des Tantalpulvers in der Suspension liegt dann bei ca. 0,02 bis 0,05 Vol.-%. Der D50-Wert wird dann nach ASTM B 822 bestimmt. Anschließend wird mit dem Ultraschallerreger des MasterSizer Sµ-Gerätes unter weiterem Rühren 5 Minuten lang eine Ultraschallleistung von 60 Watt eingetragen. Dabei werden schwache Sinterbrücken der Agglomeratteilchen durch Stöße der Teilchen untereinander aufgebrochen. Eine längere Einwirkdauer des Ultraschalls bewirkt keine weitere Veränderung der Partikelverteilung. Anschließend wird erneut der D50-Wert nach ASTM B 822 ("D50_{US}"-Wert) bestimmt.

Gegenstand der Erfindung ist auch das Verfahren zur Herstellung derartiger Tantalpulver mit hoher Agglomeratstabilität, das dadurch gekennzeichnet ist, das in einer ersten Stufe Tantalpentoxid mittels dampfförmiger reduzierender Metalle bei einem Dampfpartialdruck von 5 bis 110 hPa zum Tantalmetall reduziert wird, das Pulver nach Abkühlung passiviert, von anhaftendem Oxid des reduzierenden Metalls befreit wird, und anschließend durch Vermischen mit Magnesium und Erhitzen auf 680 bis 850°C hinsichtlich seiner Primärstruktur vergröbert wird.

### Beispiele 1 bis 16

### A) Reduktion von Tantalpentoxid

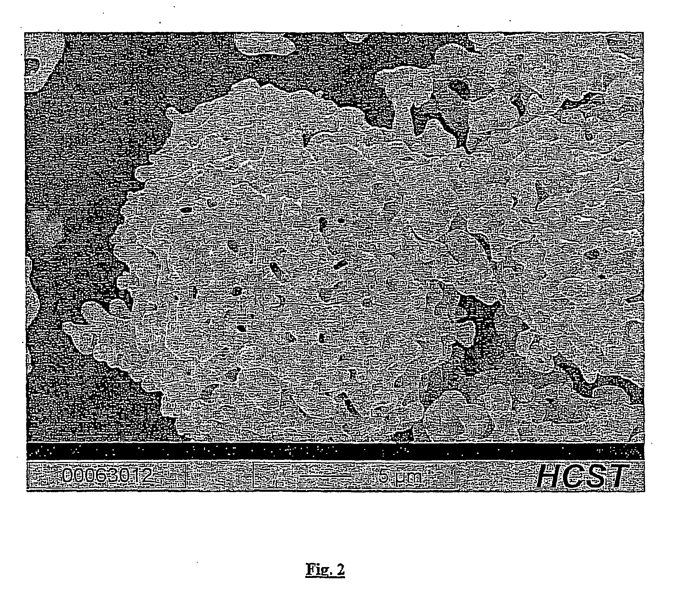

Es wird ein feinteiliges, teilversintertes Ausgangs-Tantalpentoxid mit einer mittleren Primärteilchengröße von ca. 0,01 µm (visuell bestimmt aus REM-Aufnahmen (REM = Rasterelektronenmikroskop)), einer nach ASTM B 822 (Gerät Malvern MasterSizer Sµ) bestimmten Teilchengrößenverteilung entsprechend einem D10-Wert von 17,8 µm, einem D50-Wert von 34,9 µm und einem D90-Wert von 71,3 µm und einer gemäß ASTM D 3663 bestimmten spezifischen Oberfläche (BET) von 0,14 m²/g eingesetzt. Die Einzelteilchen des Pulvers sind hochporös. Aus REM-Aufnahmen ist erkennbar, dass die Teilchen aus stark versinterten Agglomeraten von angenähert kugelförmigen Primärteilchen eines mittleren Durchmessers von 2,4 µm bestehen. Fig. 2 zeigt eine . REM-Aufnahme des Ausgangspentoxides.

Das Ausgangs-Tantalpentoxid wird auf einem Geflecht aus Tantaldraht in einen mit Tantalblech ausgeldeideten Reaktor oberhalb eines Tiegels, der die 1,1-fach stöchiometrische Menge (bezogen auf den Sauerstoffgehalt des Pentoxides) an Magnesium enthält, gegeben. Der Reaktor wird durch einen Ofen beheizt. Unterhalb des Magnesium enthaltenden Tiegels befindet sich am Reaktor eine Gaseinlassöffnung sowie oberhalb der Tantalpentoxidschüttung eine Gasabzugsöffnung. Der Gas-Innendruck des Ofens kann über eine die Ofenwand durchdringende Stichleitung gemessen werden. Als Schutzgas wird Argon eingesetzt, das langsam durch den Ofen strömt. Vor Beginn des Aufheizens auf die Reduktionstemperatur wird der Reaktor mit Argon gespült Vor dem Erreichen der Reduktionstemperatur wird der Argondruck für die Reduktion eingestellt. Nach Beendigung der Reaktion und Abkühlen des Reaktors wird allmählich Luft in den Reaktor gegeben, um das Metallpulver gegen Abbrand zu passivieren. Das gebildete Magnesiumoxid wird durch Waschen mit Schwefelsäure und anschließend entmineralisiertem Wasser bis zur Neutralität entfernt.

Tabelle 1 zeigt die Reduktionsbedingungen und Eigenschaften der nach dem Abkühlen und Passivieren erhaltenen Pulver der Beispiele 1 bis 16. Die Werte "Mastersizer D10, D50, D90" sind nach ASTMB 822 bestimmt. In der rechten Spalte ist ferner der Sauerstoffgehalt des reduzierten Tantals bezogen auf die spezifische Oberfläche angegeben, d.h. der Quotient aus Sauerstoffgehalt in ppm und der nach BET gemessenen spezifischen Oberfläche. Ein oberflächlicher Sauerstoff gehalt von etwa 3000 ppm/(m²/g) ist erforderlich, da das Tantalpulver andernfalls pyrophor wäre und bei Kontakt mit der Umgebungsluft abbrennen würde.

Die Beispiele 1 bis 9 wurden bei im wesentlichen konstantem Argon-Druck und konstanter Reaktortemperatur durchgeführt. Die Realctortemperatur definiert jeweils auch den Magnesiumdampfpartialdruck: 8 hPa bei 700°C, 19 hPa bei 750°C, 29 hPa bei 780°C, 39 hPa bei 800°C, 68 hPa bei 840°C, 110 hPa bei 880°C.

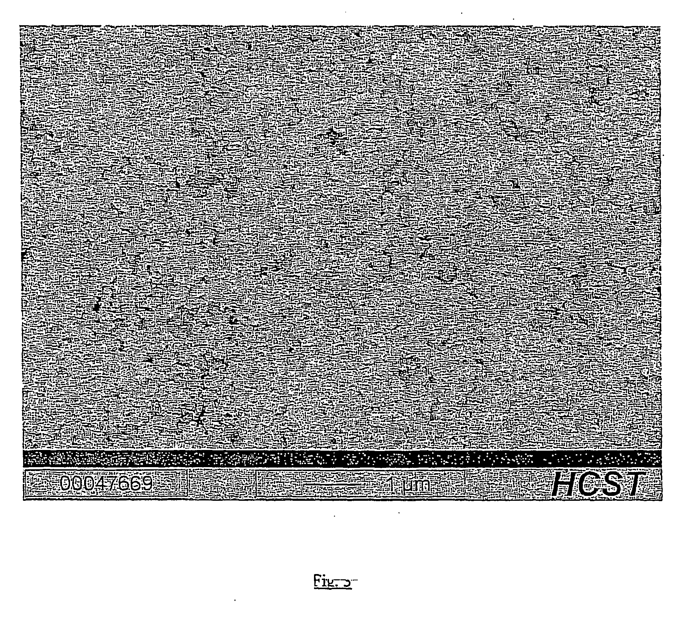

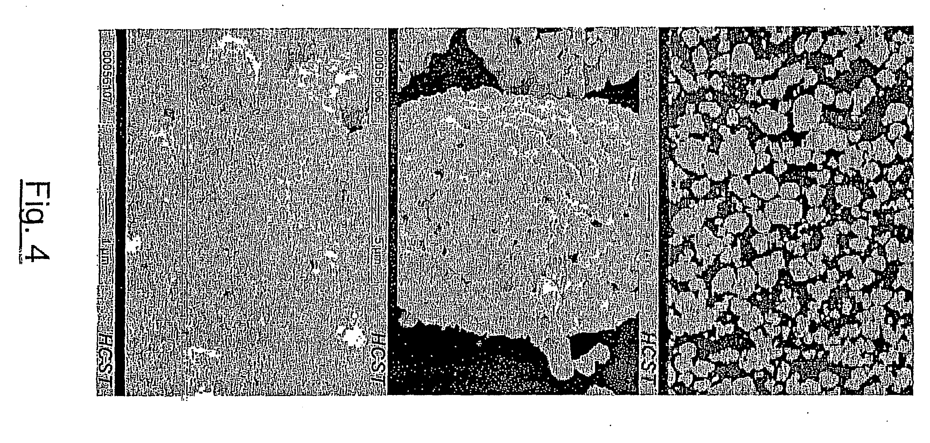

Fig. 3 zeigt eine REM-Aumahme des Produktes nach Beispiel 9. Fig. 4 zeigt eine RBM-Aufnahme des Produktes nach Beispiel 3,

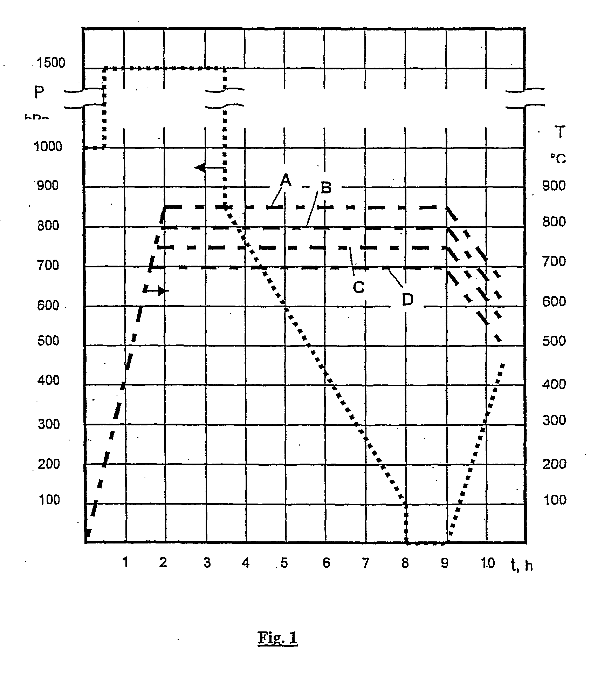

Bei den Beispielen 10 bis 13 wurde im wesentlichen bei konstanter Reaktortemperatur von 700, 750, 800 bzw. 850°C reduziert, jedoch wurde zunächst 1,5 Stunden bei einem hohen Argondruck von 1,5 Atmosphären und danach 4,5 Stunden bei von 850 hPa auf 100 hPa abnehmendem Argondruck reduziert. Der Verlauf von Druck und Temperatur sind in Fig. 1 dargestellt Der hohe Druck am Anfang der Reduktion bewirkt eine Verlangsamung der Reduktionsgeschwindzgkeit zu Beginn der exothermen Reaktion, so dass insgesamt eine Vergleichmäßigung der Reduktionsgeschwindigkeit bewirkt wird.

Die Beispiele 14 bis 16 wurden bei im wesentlichen gleichmäßig über 7 Stunden von 700 auf 780°C bzw. 720 auf 800°C bzw. 730 auf 800°C ansteigender Temperatur durchgeführt

Die Primärkorngröße war bei allen Proben in etwa erhalten geblieben, ebenso wie die Korngrößenverteilung, die aus den Mastersizer D10-, D50- und D90-Werten erkennbar ist. Es ergab sich aber eine vom Dampfpartialdruck des reduzierenden Metalls abhängige spezifische Oberfläche. Der Sauerstoffgehalt aller Proben lag im wesentlichen bei etwa 3000 µg/m² (ppm/(m²/g)) Oberfläche, d.h. der Sauerstoffgehalt überstieg kaum den notwendigen Sauerstoffgehalt, damit die Pulver nicht im Kontakt mit der Umgebungsluft abbrannten.

Die Proben wurden anschließend einer standardisierten Behandlung im Ultraschallbad unterzogen, wobei schwache Sinterbrücken der Agglomerate erstört wurden. Die Bestimmung der Korngrößenverteilung nach der Ultraschallbehandlung ergab die ebenfalls in Tabelle angegebenen D10_{US}-, D50_{US}- und D90_{US}-Werte. Das Verhältnis D50/D50_{US} kann als ein relatives Maß für die Stabilität der bei der Reduktion erzeugten Sinterbrücken angesehen werden. Es zeigt sich, dass die Sinterbrücken offenbar bereits nach der Reduktion um so stabiler sind, bei je niedrigerer Temperatur die Reduktion durchgeführt wurde.

### B) Desoxidation der Tantalpulver

Die Pulver der Beispiele 1 bis 16 wurden mit Ammoniumdihydrogenphosphatlösung getränkt und getrocknet, so dass eine Phosphordotierung von 150 ppm resultiert.

Die Pulver wurden anschließend mit einer auf ihren jeweiligen Sauerstoffgehalt bezogenen 1,2-fach stöchiometrischen Menge an Magnesium vermischt und unter Argon-Schutzgas für zwei Stunden auf 700°C bzw. 800°C erhitzt, abgekühlt, passiviert, vom Magnesiumoxid frei gewaschen und durch ein Sieb mit 300 µm Maschenweite gerieben. Die Teilchengrößenverteilung der erhaltenen Pulver (als D10-, D50,- und D90-Wert nach ASTM B 822, sowie entsprechende Werte nach standardisierter Ultraschallbehandlung) und die spezifische Oberfläche sind in Tabelle 2 angegeben.

Aus den Pulvern wurden Presskörper der Abmessung 3 mm Durchmesser und 3,96 mm Länge mit einer Pressdichte von 5,0 g/cm³ hergestellt, wobei in die Pressmatrize vor dem Einfüllen der Pulver ein Tantaldraht von 0,2 mm Dicke als Kontaktdraht eingelegt wurde. Die Presskörper wurden bei 1210°C im Hochvakuum während 10 Minuten versintert.

Die Anodenkörper wurden in 0,1%ige Phosphorsäure eingetaucht und bei einer auf 150 mA begrenzten Stromstärke bis zu einer Formierspannung von 16 V formiert. Nach Abfallen der Stromstärke wurde die Spannung noch eine Stunde aufrechterhalten. Zur Messung der Kondensatoreigenschaften wurde eine Kathode aus 18%iger Schwefelsäure eingesetzt. Es wurde mit einer Wechselspannung von 120 Hz gemessen.

Spezifische Kapazität und Reststrom sind in Tabelle 2 angegeben.

**Tabelle 1**

| Bsp. Nr. | Reduktionsbedingtungen | | | Produkteigenschaften | | | | | | | | |
|---|---|---|---|---|---|---|---|---|---|---|---|---|
| | Gasdruck | Reaktor-Temperatur | Red.-Dauer | Spez. Oberfläche | Mastersizer D10 D50 D90 | | | O₂-Gehalt | Mastersizer nach US¹ D10_{US}D50_{US}D90_{US} | | | D50/D50_{US} |
| | hPa | °C | h | m²/g | µm | µm | µm | µg/m² | µm | µm | µm | |
| 1 | 50 | 700 | 8 | 13,4 | 14,6 | 30,5 | 52,7 | 3441 | 0,59 | 12,7 | 25,3 | 2,40 |
| 2 | 200 | 750 | 8 | 10,1 | 16,0 | 33,1 | 66,0 | 2765 | 0,59 | 13,6 | 33,7 | 2,43 |
| 3 | 350 | 750 | 8 | 12,3 | 14,9 | 31,1 | 53,4 | 3064 | 0,58 | 10,1 | 29,7 | 3,08 |
| 4 | 500 | 780 | 8 | 7,3 | 14,2 | 29,7 | 49,7 | 4063 | 0,53 | 9,5 | 24,1 | 3,13 |
| 5 | 500 | 840 | 8 | 6,3 | 12,9 | 26,9 | 43,7 | 2492 | 0,53 | 8,0 | 23,5 | 3,36 |
| 6 | 550 | 860 | 8 | 4,4 | 11,8 | 26,8 | 44,8 | 2654 | 0,61 | 8,2 | 25,9 | 3,27 |
| 7 | 580 | 880 | 8 | 4,7 | 9,3 | 26,6 | 48,4 | 2787 | 0,55 | 5,9 | 21,8 | 4,51 |
| 8 | 580 | 900 | 8 | 3,8 | 16,2 | 32,7 | 59,7 | 2872 | 0,67 | 6,3 | 19,2 | 5,19 |
| 9 | 1000 | 940 | 8 | 2,7 | 16,7 | 34,6 | 60,3 | 2798 | 0,71 | 14,1 | 27,7 | 2,45 |

| | | | | | | | | | | | | |
|---|---|---|---|---|---|---|---|---|---|---|---|---|
| ¹: US = Ultraschallbehandlung | | | | | | | | | | | | |

**Tabelle 2**

| Bsp. Nr. | Desoxidations temp. | Produkteigenschaften nach Primärstrukturvergröberung | | | | | | | | Kondensator | |
|---|---|---|---|---|---|---|---|---|---|---|---|
| | | Mastersizer | | | Mastersizer nach US¹ | | | D50/D50_{US} | Spez. Oberfläche | Spez. Kapazität | Spez. Reststrom |
| | | D10 | D50 | D90 | D10_{US} | D50_{US} | D90_{US} | | | | |
| | °C | µm | µm | µm | µm | µm | µm | | m²/g | µFV/g | nA/µFV |
| 1 | 700 | 18,9 | 49,9 | 215,9 | 12,3 | 40,6 | 72,3 | 1,23 | 2,79 | 142084 | 1,22 |
| 2 | 700 | 18,5 | 39,9 | 216,7 | 6,9 | 23,9 | 74,6 | 1,67 | 3,02 | 153836 | 0,49 |
| 3 | 700 | 18,3 | 38,7 | 213,3 | 7,1 | 25,0 | 71,8 | 1,55 | 2,89 | 144489 | 1,42 |
| 4 | 700 | 15,9 | 32,4 | 75,5 | 0,89 | 17,1 | 40,1 | 1,89 | 3,11 | 156347 | 0,67 |
| 5 | 800 | 14,2 | 28,8 | 47,8 | 0,79 | 15,8 | 32,1 | 1,82 | 1,83 | 103484 | 0,46 |
| 6 | 800 | 15,2 | 31,4 | 67,1 | 1,52 | 15,9 | 38,5 | 1,98 | 1,87 | 106705 | 0,64 |
| 7 | 800 | 18,8 | 35,8 | 67,1 | 0,96 | 18,7 | 43,4 | 1,91 | 1,92 | 107931 | 0,86 |
| 8 | 700 | 18,9 | 36,5 | 72,8 | 1,05 | 15,2 | 47,3 | 2,40 | 2,90 | 145131 | 0,97 |
| 9 | 800 | 17,3 | 34,9 | 63,2 | 6,38 | 16,5 | 51,2 | 2,11 | 1,90 | 105393 | 0,46 |

| | | | | | | | | | | | |
|---|---|---|---|---|---|---|---|---|---|---|---|
| ¹: US = Ultraschallbehandlung | | | | | | | | | | | |

## Patentansprüche

1. Verfahren zur Herstellung von Ventilmetallpulvern durch Reduktion entsprechender Ventilmetalloxidpulver mittels dampfförmiger reduzierender Metalle und/oder deren Hydride unter stationärem Gasdruck, wobei die Reduktion bei einem Dampfdruck des reduzierenden Metalls/Metallhydrides von 5 bis 110 hPa durchgeführt wird und der Gesamtdruck im Reaktionsraum während der gesamten Reduktionsdauer kleiner 1000 hPa beträgt.

2. Verfahren nach Anspruch 1, **dadurch gekennzeichnet, dass** der Dampfdruck des reduzierenden Metalls weniger als 80 hPa beträgt.

3. Verfahren nach Anspruch 2, **dadurch gekennzeichnet, dass** der Dampfdruck des reduzierenden Metalls zwischen 8 und 50 hPa beträgt.

4. Verfahren nach einem der Ansprüche 1 bis 3, **dadurch gekennzeichnet, dass** als Ventilmetalloxide Oxide von Titan, Zirkon, Hafnium, Vanadium, Niob, Tantal, Molybdän und/ oder Wolfram, vorzugsweise Niob und/oder Tantal, eingesetzt werden.

5. Verfahren nach Anspruch 4, **dadurch gekennzeichnet, dass** als Ventil metalloxid Tantalpentoxid eingesetzt wird.

6. Verfahren nach einem der Ansprüche 1 bis 5, **dadurch gekennzeichnet, dass** die Reduktion in Gegenwart eines inerten Trägergases durchgeführt wird.

7. Verfahren nach Anspruch 6, **dadurch gekennzeichnet, dass** der Partialdruck des inerten Trägergases 50 bis 800 hPa, vorzugsweise weniger als 600 hPa, insbesondere bevorzugt 100 bis 500 hPa, beträgt.

8. Verfahren nach einem der Ansprüche 1 bis 7, **dadurch gekennzeichnet, dass** die Quelle des reduzierenden Metalls oder Hydrides örtlich von dem zu reduzierenden Ventilmetalloxid getrennt ist.

9. Verfahren nach einem der Ansprüche 1 bis 8, **dadurch gekennzeichnet, dass** als gasförmiges reduzierendes Metall Magnesiumdampf eingesetzt wird..

10. Verfahren nach einem der Ansprüche 1 bis 9, **dadurch gekennzeichnet, dass** als Ventilmetalloxidpulver Tantalpentoxid eingesetzt wird und das entstehende Tantalmetallpulver in einem weiteren Schritt mit Magnesium vermischt und auf 680 bis 850°C erhitzt wird, so dass die spezifische Oberfläche des Tantalmetallpulvers auf weniger als 1/3 der spezifischen Oberfläche des Tantalmetallpulvers vor der weiteren Behandlung reduziert wird.

11. Verfahren nach Anspruch 1 zur Herstellung von Tantalpulver, aus dem durch Verpressen und Sintern bei 1200 bis 1250°C Kondensatoren mit einer spezifischen Kapazität von 60.000 bis 160.000 µFV/g herstellbar sind, wobei ein Tantalpentoxidpulver mittels Magnesiumdampf bei einem Dampfdruck von 5 bis 110 hPa, der Gesamtdruck im Reaktionsraum während der gesamten Reduktionsdauer kleiner 1000 hPa beträgt, und das Tantalpentoxidpulver bei einer Temperatur von weniger als 880°C reduziert wird, so dass ein Metallpulver mit einer spezifischen Oberfläche von 6 bis 15 m²/g entsteht, die Oberfläche des Metallpulvers anschließend nach Vermischen mit einer leicht überstöchiometrischen Menge Magnesium bei einer Temperatur von 680 bis 850°C um mindestens einen Faktor 3 auf 0,9 bis 4 m²/g reduziert wird.

## Claims

1. Process for the production of valve metal powders by reduction of corresponding valve metal oxide powders by means of vaporous reducing metals and/or hydrides thereof under steady gas pressure, wherein the reduction is performed under a vapour pressure of the reducing metal/metal hydride of 5 to 110 hPa and the overall pressure in the reaction space during the entire reduction period is less than 1000 hPa.

2. Process according to Claim 1, **characterized in that** the vapour pressure of the reducing metal is less than 80 hPa.

3. Process according to Claim 2, **characterized in that** the vapour pressure of the reducing metal is between 80 and 50 hPa.

4. Process according to any one of Claims 1 to 3, **characterized in that** oxides of titanium, zirconium, hafnium, vanadium, niobium, tantalum, molybdenum and/or tungsten, preferably niobium and/or tantalum, are used as valve metal oxides.

5. Process according to Claim 4, **characterized in that** tantalum pentoxide is used as valve metal oxide.

6. Process according to any one of Claims 1 to 5, **characterized in that** the reduction is performed in the presence of an inert carrier gas.

7. Process according to Claim 6, **characterized in that** the partial pressure of the inert carrier gas is 50 to 800 hPa, preferably less than 600 hPa, more preferably 100 to 500 hPa.

8. Process according to any one of Claims 1 to 7, **characterized in that** the source of the reducing metal or hydride is in a separate location from the valve metal oxide to be reduced.

9. Process according to any one of Claims 1 to 8, **characterized in that** magnesium vapour is used as gaseous reducing metal.

10. Process according to any one of Claims 1 to 9, **characterized in that** tantalum pentoxide is used as valve metal oxide powder and the resulting tantalum metal powder is mixed with magnesium in a further step and heated to 680 to 850°C, so that the specific surface area of the tantalum metal powder is reduced to less than 1/3 of the specific surface area of the tantalum metal powder before the further treatment.

11. Process according to Claim 1 for the production of tantalum powder from which capacitors having a specific capacity of 60 0 000 0 to 160 0 000 µFV/g are obtainable by compacting and sintering at 1200 to 1250°C, wherein a tantalum pentoxide powder is reduced by means of magnesium vapour at a vapour pressure of 5 to 110 hPa, the overall pressure in the reaction space during the entire reduction period is less than 1000 hPa, and the tantalum pentoxide powder is reduced at a temperature of less than 880°C to form a metal powder having a specific surface area of 6 to 15 m²/g, and subsequently, after mixing with a slightly superstoichiometric amount of magnesium, the surface area of the metal powder is reduced at a temperature of 680 to 850°C by at least a factor of 3 to 0.9 to 4 m²/g.

## Revendications

1. Procédé de fabrication de poudres métalliques pour soupapes, par réduction de poudres pour soupapes de l'oxyde métallique correspondant au moyen de vapeurs de métaux réducteurs et/ou de leurs hydrures sous une pression de gaz stationnaire, dans lequel
la réduction est conduite à une pression de vapeur du métal ou de l'hydrure métallique réducteur de 5 à 110 hPa et
la pression totale dans la chambre de réaction pendant toute la durée de la réduction est inférieure à 1 000 hPa.

2. Procédé selon la revendication 1, **caractérisé en ce que** la pression de vapeur du métal réducteur est inférieure à 80 hPa.

3. Procédé selon la revendication 2, **caractérisé en ce que** la pression de vapeur du métal réducteur est comprise entre 8 et 50 hPa.

4. Procédé selon l'une des revendications 1 à 3, **caractérisé en ce que** comme oxyde métallique pour soupapes, on utilise des oxydes de titane, de zirconium, de hafnium, de vanadium, de niobium, de tantale, de molybdène et/ou de tungstène et de préférence de niobium et/ou de tantale.

5. Procédé selon la revendication 4, **caractérisé en ce que** comme oxyde métallique pour soupape, on utilise le pentoxyde de tantale.

6. Procédé selon l'une des revendications 1 à 5, **caractérisé en ce que** la réduction est conduite en présence d'un gaz porteur inerte.

7. Procédé selon la revendication 6, **caractérisé en ce que** la pression partielle du gaz porteur inerte est comprise entre 50 et 800 hPa, est de préférence inférieure à 600 hPa et est de façon particulièrement préférable comprise entre 100 et 500 hPa.

8. Procédé selon l'une des revendications 1 à 7, **caractérisé en ce que** la source du métal réducteur ou de l'hydrure de métal réducteur est séparée spatialement de l'oxyde métallique pour soupapes à réduire.

9. Procédé selon l'une des revendications 1 à 8, **caractérisé en ce que** comme métal réducteur gazeux, on utilise une vapeur de magnésium.

10. Procédé selon l'une des revendications 1 à 9, **caractérisé en ce que** comme poudre d'oxyde métallique pour soupapes, on utilise le pentoxyde de tantale et **en ce que** dans une étape ultérieure, la poudre métallique de tantale obtenue est mélangée avec du magnésium et est chauffée entre 680 et 850°C de manière à réduire la surface spécifique de la poudre métallique de tantale à moins de 1/3 de la surface spécifique de la poudre métallique de tantale avant ce traitement ultérieur.

11. Procédé selon la revendication 1, pour la fabrication d'une poudre de tantale à partir de laquelle, par compression et frittage entre 1 200 et 1 250°C, on peut fabriquer des condensateurs d'une capacité spécifique de 60 000 à 160 000 µFV/g, dans lequel
on réduit une poudre de pentoxyde de tantale au moyen d'une vapeur de magnésium à une pression de vapeur de 5 à 110 hPa, la pression totale dans la chambre de réaction pendant la totalité de la durée de la réduction étant inférieure à 1 000 hPa,
on maintient la poudre de pentoxyde de tantale à une température inférieure à 880°C de manière à obtenir une poudre métallique d'une surface spécifique de 6 à 15 m²/g,
on réduit ensuite la surface de la poudre métallique d'au moins un facteur 3 jusqu'à 0,9 à 4 m²/g à une température de 680 à 850°C après mélange avec une quantité légèrement sur-stoechiométrique de magnésium.
